(19) Europäisches Patentamt
European Patent Office
Office européen des brevets

(11) EP 2 032 948 B1

(12) EUROPÄISCHE PATENTSCHRIFT

(45) Veröffentlichungstag und Bekanntmachung des Hinweises auf die Patenterteilung:
**17.08.2016 Patentblatt 2016/33**

(51) Int Cl.:
**G01D 5/20** (2006.01)

(21) Anmeldenummer: **07711457.7**

(22) Anmeldetag: **07.02.2007**

(86) Internationale Anmeldenummer:
**PCT/EP2007/001025**

(87) Internationale Veröffentlichungsnummer:
**WO 2007/134653 (29.11.2007 Gazette 2007/48)**

(54) **VORRICHTUNG ZUR BESTIMMUNG DER POSITION EINES ENTLANG MINDESTENS EINER VERSCHIEBERICHTUNG BEWEGBAREN OBJEKTES**

DEVICE FOR DETERMINING THE POSITION OF AN OBJECT WHICH IS MOVABLE ALONG AT LEAST ONE MOVEMENT DIRECTION

DISPOSITIF DE DÉTERMINATION DE LA POSITION D'UN OBJET DÉPLAÇABLE LE LONG D'AU MOINS UNE DIRECTION DE DÉPLACEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.05.2006 DE 102006024579**

(43) Veröffentlichungstag der Anmeldung:
**11.03.2009 Patentblatt 2009/11**

(73) Patentinhaber: **Dr. Johannes Heidenhain GmbH 83301 Traunreut (DE)**

(72) Erfinder:
• **METZ, Gerald**
  **83368 St. Georgen (DE)**
• **SPAETH, Christian**
  **83026 Rosenheim (DE)**
• **DANGSCHAT, Holmer**
  **83301 Traunreut (DE)**

(56) Entgegenhaltungen:
**EP-A2- 0 482 553    WO-A-2005/115687**
**DE-A1- 4 219 311**

**Beschreibung**

Die Erfindung betrifft eine Vorrichtung zur Bestimmung der Position eines entlang mindestens einer Verschieberichtung (also entlang einer ersten Richtung und ggf. entlang einer zweiten und/oder dritten Richtung) bewegbaren Objektes nach dem Oberbegriff des Patentanspruchs 1.

Eine derartige Vorrichtung umfasst mindestens einen Maßstab, der sich als erste Komponente einer Längenmesseinrichtung entlang der zugeordneten Verschieberichtung, also z.B. der ersten Richtung, erstreckt, und einen zugeordneten Abtastkopf zum Abtasten des Maßstabes als zweite Komponente der Längenmesseinrichtung, relativ zu dem der Maßstab entlang der ersten Richtung beweglich ist, so dass eine Änderung der Position des Maßstabes bezüglich des Abtastkopfes entlang der ersten Richtung erfassbar ist, wobei entweder der Maßstab oder der Abtastkopf gemeinsam mit dem zu messenden Objekt entlang der ersten Richtung bewegt wird und wobei ferner eine Einrichtung zur Bestimmung des Abstandes der gemeinsam mit dem zu messenden Objekt bewegbaren Komponente der Längenmesseinrichtung von jenem Objekt vorgesehen ist.

Eine aus der DE 42 19 311 C2 bekannte Vorrichtung der eingangs genannten Art in Form eines Verschiebungsdetektors umfasst ein Chassis; einen berührungslosen Sensor (Abstandssensor) in Form eines Fokus-Sensors zum Erfassen des Abstandes zwischen dem Sensor und einer Oberfläche (Spiegelfläche) eines zu messenden Objektes; eine lineare Skala, die mit dem Focus-Sensor über ein Verbindungsteil fest verbunden ist; eine am Chassis befestigte Einrichtung zum Auslesen der Strichunterteilung der linearen Skala; ein Stellglied zum Bewegen des Focus-Sensors und der linearen Skala, wodurch die lineare Skala und der Focus-Sensor gemeinsam relativ zum Chassis verstellt werden; sowie eine Steuerschaltung zum Betreiben des Stellgliedes.

Die lineare Skala (Maßstab) und die zugeordnete Einrichtung zum Auslesen der Strichunterteilung der linearen Skala (Abtastkopf) dienen dabei zur Ermittlung einer Bewegung des zu messenden Objektes, wobei die lineare Skala gemeinsam mit jenem Objekt bewegbar ist und die zugeordnete Einrichtung zum Auslesen der Strichunterteilung der linearen Skala ortsfest mit dem Chassis des Verschiebungsdetektors verbunden ist. Mit dem an der linearen Skala vorgesehenen berührungslosen Sensor in Form eines Focus-Sensors als einer Einrichtung zur Bestimmung des Abstandes zwischen der linearen Skala und der Oberfläche des zu messenden Objektes lässt sich der Abstand zwischen der linearen Skala und dem zu messenden Objekt feststellen. Hierdurch müssen keine besonders hohen Anforderungen an die Nachführung der linearen Skala bei einer Bewegung des zu messenden Objektes gestellt werden, weil durch den der linearen Skala zugeordneten Focus-Sensor ermittelt werden kann, welchen Abstand die lineare Skala von dem zu messenden Objekt aufweist.

Eine Bewegung des zu messenden Objektes bzw. der betrachteten Oberfläche des Objektes wird anhand der Relativbewegung der linearen Skala zur zugeordneten Einrichtung zum Auslesen der Strichunterteilung der linearen Skala ermittelt, wobei Nachführfehler der linearen Skala anhand der Messergebnisse des Focus-Sensors betreffend den Abstand zwischen linearer Skala und zu messendem Objekt bzw. dessen betrachteter Oberfläche korrigiert (kompensiert) werden können.

Der bekannte Verschiebungsdetektor hat den Nachteil, dass aufgrund von Schwankungen der Parameter der Umgebungsluft (Luftparameterveränderungen), insbesondere des Brechungsindex, die Messergebnisse des berührungslosen Sensors Unsicherheiten unterliegen und somit für hochpräzise Messungen nicht hinreichend genau sind.

Der Erfindung liegt das Problem zugrunde, eine Vorrichtung zur Bestimmung der Position eines entlang mindestens einer Verschieberichtung bewegbaren Objektes der eingangs genannten Art weiter zu verbessern.

Dieses Problem wird erfindungsgemäß durch die Schaffung einer Vorrichtung mit den Merkmalen des Patentanspruchs 1 gelöst.

Danach ist bei einer gattungsgemäßen Vorrichtung vorgesehen, dass die Einrichtung zur Bestimmung des Abstandes zwischen der gemeinsam mit dem zu messenden Objekt bewegbaren Komponente des Längenmesssystems einerseits und dem zu messenden Objekt selbst andererseits eine Messteilung als erste Baugruppe und einen zugeordneten Messkopf als zweite Baugruppe umfasst, wobei eine der beiden Baugruppen an dem zu messenden Objekt vorgesehen (d.h., mit diesem mitfahrend verbunden) ist und die andere der beiden Baugruppen an der gemeinsam mit dem zu messenden Objekt bewegbaren Komponente der Längenmesseinrichtung vorgesehen (d.h., mit dieser mitfahrend verbunden) ist.

Die erfindungsgemäße Lösung hat den Vorteil, dass zur Bestimmung des Abstandes zwischen dem zu messenden Objekt und der gemeinsam mit dem zu messenden Objekt bewegbaren (verschiebbaren) Komponente der Längenmesseinrichtung ein weiteres Längenmesssystem verwendet wird, das auf dem Prinzip der Abtastung einer Messteilung mittels eines zugeordneten Messkopfes beruht. Hierdurch sind die Messergebnisse unabhängig von den Parametern der Umgebungsluft.

Die erfindungsgemäße Vorrichtung zur Bestimmung der Position eines entlang einer oder mehrerer Verschieberichtungen bewegbaren Objektes kann dabei nicht nur für Messungen im engeren Sinne, etwa zum Kalibrieren eines auf dem Objekt vorgesehenen Kreuzgitters, vorgesehen sein, sondern sie kann auch (durch Zusammenwirken mit einer Steuereinrichtung, welche die ermittelten Positionswerte zur Steuerung nutzt) zum Positionieren des zu messenden Objektes beim Bearbeiten des Objektes verwendet werden, zum Beispiel zum Belichten von Strukturen einer fotoempfindlich beschichteten Platte (Fotolithographie) oder zum Gravieren mit Laser oder Fräser.

Gemäß einer vorteilhaften Weiterbildung der Erfindung dient die erfindungsgemäße Vorrichtung zur Bestimmung der Position eines entlang zweier linear unabhängiger (insbesondere zueinander senkrechter) Verschieberichtungen bewegbaren Objektes, z. B. eines auf einem Messtisch festgelegten Objektes. In diesem Fall ist jeder der beiden Verschieberichtungen eine Längenmesseinrichtung zugeordnet, die als eine erste Komponente einen entlang der entsprechenden Verschieberichtung erstreckten Maßstab und als zweite Komponente einen zur Abtastung dieses Maßstabes vorgesehenen Abtastkopf aufweist, so dass für jede der beiden Verschieberichtungen eine Änderung der Position des Abtastkopfes bezüglich des jeweils zugeordneten Maßstabes erfassbar ist, wobei bei jeder der beiden Längenmesseinrichtungen entweder der Maßstab oder der Abtastkopf gemeinsam mit dem zu messenden Objekt entlang der jeweiligen Verschieberichtung bewegt wird. Ferner ist jede der beiden Längenmesseinrichtungen einer Einrichtung zur Bestimmung des Abstandes der gemeinsam mit dem zu messenden Objekt bewegbaren Komponente der jeweiligen Längenmesseinrichtung von dem zu messenden Objekt entlang der jeweiligen Verschieberichtung zugeordnet. Die beiden Einrichtungen zur Bestimmung des Abstandes zwischen der jeweils gemeinsam mit dem zu messenden Objekt bewegbaren Komponente der jeweiligen Längenmesseinrichtung und dem zu messenden Objekt selbst entlang der jeweiligen Verschieberichtung umfassen dabei jeweils eine Messteilung als erster Baugruppe und einen zugeordneten Messkopf als zweiter Baugruppe, wobei jeweils eine der beiden Baugruppen an dem zu messenden Objekt vorgesehen ist und die andere der beiden Baugruppen mit der gemeinsam mit dem zu messenden Objekt entlang der jeweiligen Verschieberichtung bewegbaren Komponente der Längenmesseinrichtung verbunden ist.

Mit einer solchen Vorrichtung lassen sich beliebige Bewegungen des zu messenden Objektes in einer Ebene erfassen, die ja jeweils als eine Superposition (Kombination) von Bewegungen entlang der beiden linear unabhängigen Verschieberichtungen darstellbar sind, für die jeweils eine der beiden Längenmesseinrichtungen empfindlich ist.

Gemäß einer bevorzugten Ausführungsform der beschriebenen Weiterbildung der Erfindung sind die beiden nicht gemeinsam mit dem zu messenden Objekt bewegbaren Komponenten der Längenmesseinrichtungen, bei denen es sich insbesondere um die Abtastköpfe der Längenmesseinrichtungen handelt, starr miteinander verbunden.

Als gemeinsam mit dem zu messenden Objekt bewegbare Komponente einer Längenmesseinrichtung dient demnach bevorzugt der Maßstab der Längenmesseinrichtung. An diesem ist wiederum vorteilhaft der Messkopf angeordnet, der zur Abtastung einer an dem zu messenden Objekt vorgesehenen Messteilung dient, und zwar insbesondere durch eine starre, mitfahrende Verbindung.

Sowohl der mindestens eine (bevorzugt gemeinsam mit dem zu messenden Objekt bewegbare) Maßstab als auch die mindestens eine (bevorzugt an dem zu messenden Objekt vorgesehene) Messteilung weisen bevorzugt jeweils eine Inkrementalspur (Inkrementalteilung) in Form einer periodischen Strichteilung auf.

Bei dem zu messenden Objekt kann es sich um eine Messplatte, z. B. fixiert auf einem so genannten Messtisch, handeln, die in einer Ebene verfahrbar ist und der eine Abtasteinrichtung zugeordnet ist, welche eine auf der Messplatte vorgesehene Maßverkörperung abtastet und hierdurch Bewegungen der Messplatte in der besagten Ebene erfassen kann. Die erfindungsgemäße Vorrichtung zur Bestimmung der Position eines entlang mindestens einer Verschieberichtung, insbesondere entlang zweier eine Ebene aufspannender Verschieberichtungen, verschiebbaren Objektes, hier einer Messplatte, dient dann zum Prüfen und gegebenenfalls Kalibrieren der aus der Messplatte und der zugeordneten Abtasteinrichtung bestehenden Positionsmesseinrichtung.

Hierzu sind die nicht gemeinsam mit dem zu messenden Objekt, also der Messplatte, bewegbaren Komponenten der jeweiligen Längenmesseinrichtung, also insbesondere die Abtastköpfe der beiden Längenmesseinrichtungen, starr mit der Abtasteinrichtung verbunden, die der Abtastung der Messplatte dient.

Um das zu messende Objekt entlang der mindestens einen Verschieberichtung (erste und/oder zweite Richtung) bewegen zu können, kann einerseits dem zu messenden Objekt selbst für jede vorgesehene Verschieberichtung ein Antrieb zugeordnet sein, mit dem eine gewünschte Bewegung des zu messenden Objektes entlang der jeweiligen Verschieberichtung erzeugbar ist; hierbei kann die bewegliche Komponente der jeweiligen Längenmesseinrichtung entweder passiv mitgeschleppt werden oder letzterer kann ein eigener Antrieb zugeordnet sein, wobei der entsprechende dem zu messenden Objekt zugeordnete Antrieb einerseits und der der jeweiligen Längenmesseinrichtung zugeordnete Antrieb andererseits so synchronisiert sind, dass die bewegbare Komponente der Längenmesseinrichtung bei einer Bewegung des zu messenden Objektes jeweils im Wesentlichen um dieselbe Wegstrecke mitgeführt wird. Eventuelle Abweichungen werden hierbei durch die zugeordnete Einrichtung zur Bestimmung des Abstandes zwischen der gemeinsam mit dem zu messenden Objekt bewegbaren Komponente der jeweiligen Längenmesseinrichtung und dem Objekt selbst erfasst und lassen sich so kompensieren.

Nach einer anderen Ausführungsform der Erfindung wird die gemeinsam mit dem zu messenden Objekt bewegbare Komponente einer jeweiligen Längenmesseinrichtung durch einen Antrieb bewegt und schleppt das zu messende Objekt. Diese Ausführungsform hat den Vorteil, dass am zu messenden Objekt selbst kein Wärmeeintrag erfolgt.

Alternativ kann dem zu messenden Objekt für jede Verschieberichtung ein separater, von dem zu messenden Objekt beabstandeter, jedoch mit diesem verbundener Antriebschlitten zugeordnet sein, der das zu messende Objekt für eine Bewegung entlang der jeweiligen Verschieberichtung mitnimmt.

Weitere Einzelheiten und Vorteile der Erfindung werden bei der nachfolgenden Beschreibung von Ausführungsbeispielen anhand der Figuren deutlich werden.

Es zeigen:

Fig. 1      eine schematische Draufsicht auf einen in einer Ebene entlang zweier zueinander senkrechter Raumrichtungen verschiebbaren Messtisch, auf dem ein zu messendes Objekt angeordnet ist, wobei jeder Raumrichtung eine Längenmesseinrichtung zur Erfassung des Ausmaßes einer Bewegung des Messtisches zugeordnet ist;

Fig. 2a      eine detailliertere Draufsicht einer Anordnung gemäß Fig. 1;

Fig. 2b      eine erste Seitenansicht der Anordnung aus Fig. 2a;

Fig. 2c      eine zweite Seitenansicht der Anordnung aus Figur 2a;

Fig. 3a      eine erste Abwandlung der Anordnung aus den Figuren 2a, 2b und 2c hinsichtlich der Antriebsmittel zur Bewegung des Messtisches;

Fig. 3b      eine zweite Abwandlung der Anordnung aus den Figuren 2a, 2b und 2c hinsichtlich der Antriebsmittel zur Bewegung des Messtisches;

Fig. 4a      eine dritte Abwandlung der Anordnung aus den Figuren 2a, 2b und 2c hinsichtlich der Antriebsmittel zur Bewegung des Messtisches;

Fig. 4b      eine vierte Abwandlung der Anordnung aus den Figuren 2a, 2b und 2c hinsichtlich des Antriebs zur Bewegung des Messtisches;

Fig. 5a      eine schematische Draufsicht auf eine zweite Ausführungsform eines in einer Ebene entlang zweier zueinander senkrechter Raumrichtungen verschiebbaren Messtisches, auf dem ein zu messendes Objekt angeordnet ist, wobei einer Raumrichtung eine im Vergleich zu Figur 1 erweiterte Längenmesseinrichtung zur Erfassung des Ausmaßes einer Bewegung des Messtisches zugeordnet ist;

Fig. 5b      einen Ausschnitt der Anordnung aus Figur 5a;

Fig. 6      eine detailliertere Draufsicht auf die Anordnung gemäß Figur 5a.

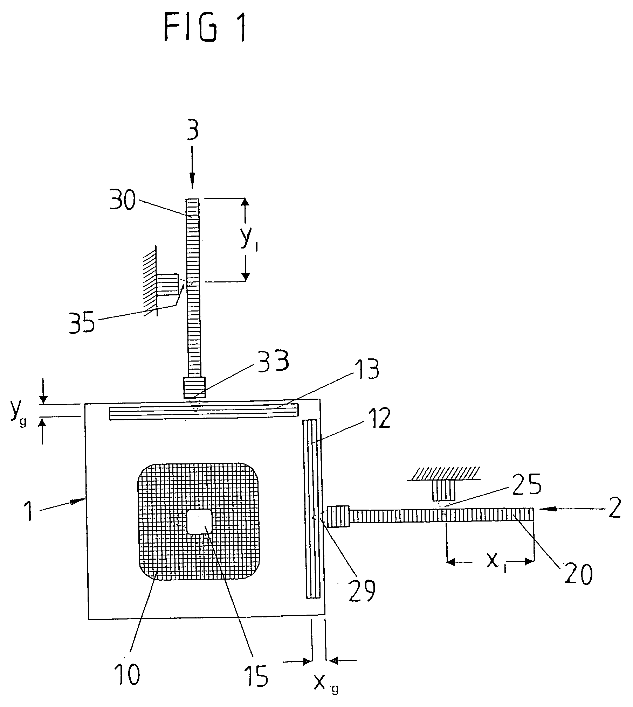

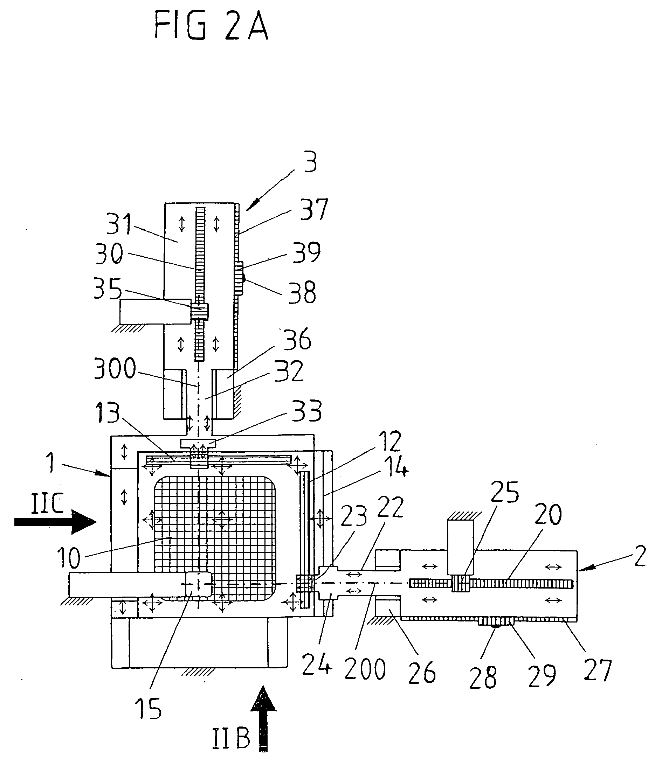

In den Figuren 1 und 2a bis 2c ist ein Messtisch 1 dargestellt, der eine mittels einer Kreuzführung 11, 16 in einer Ebene (x,y-Ebene) entlang zweier zueinander senkrechter Raumrichtungen x bzw. y (Verschieberichtungen) bewegbare (verschiebbare), auf dem Messtisch fixierte Messplatte 10 als zu messendes Objekt aufweist, die im Ausführungsbeispiel auf ihrer der Kreuzführung 11, 16 abgewandten Oberfläche mit einer durch eine Abtasteinrichtung 15 abtastbaren Maßverkörperung, zum Beispiel in Form einer Kreuzteilung, versehen ist. Die Abtasteinrichtung 15 ist ortsfest angeordnet, also nicht gemeinsam mit der Messplatte 10 des Messtisches 1 beweglich, so dass durch Abtastung der auf der Messplatte 10 vorgesehenen Maßverkörperung mittels der Abtasteinrichtung 15 das Ausmaß einer Bewegung der Messplatte 10 entlang jeder der beiden Raumrichtungen x, y ermittelbar ist.

Die Kreuzführung 11, 16 umfasst eine entlang der zweiten Raumrichtung y bewegbare Tischkomponente (Unterplatte 16) und eine hierauf entlang der ersten Raumrichtung x bewegbare Tischkomponente (Oberplatte 11), welch letztere im Ergebnis entlang beider Raumrichtungen x, y bewegbar ist und die Messplatte 10 trägt.

Vorliegend sind zur Bestimmung des Ausmaßes einer Bewegung der Messplatte 10 entlang jeder der beiden Raumrichtungen x, y außerdem zwei Längenmesseinrichtungen 2, 3 vorgesehen. Diese können einerseits dazu dienen, das Ausmaß einer Bewegung der Messplatte 10 entlang der beiden Raumrichtungen x, y unabhängig von und zusätzlich zu der Abtasteinrichtung 15 zu erfassen und hierdurch die Genauigkeit einer mittels der Abtasteinrichtung 15 und der zugeordneten Maßverkörperung der Messplatte 10 vorgenommenen Messung zu überprüfen. Alternativ können die beiden Längenmesseinrichtungen 2, 3 jedoch auch zur alleinigen Bestimmung einer Bewegung der Messplatte 10 entlang der beiden Raumrichtungen x, y vorgesehen sein. Die beiden Längenmesseinrichtungen 2, 3 sind dabei jeweils einer der beiden Raumrichtungen x, y zugeordnet und dienen zur Erfassung von Bewegungen der Messplatte 10 entlang der jeweils zugeordneten Raumrichtung x bzw. y (Messrichtung der jeweiligen Längenmesseinrichtung).

Jede der beiden Längenmesseinrichtungen 2, 3 umfasst eine Längsführung 21, 26 bzw. 31, 36, bestehend jeweils aus einem ortsfesten Führungsteil 26 bzw. 36 und einem hierauf entlang der jeweiligen Raumrichtung x oder y geführten längsbeweglichen Führungsteil 21, 31. Das bewegliche Führungsteil 21, 31 der jeweiligen Längenmesseinrichtung 2 bzw. 3 trägt einen Maßstab 20 bzw. 30, der sich entlang der jeweils zugeordneten Raumrichtung (Messrichtung) x oder y erstreckt, wobei auf dem jeweiligen Maßstab 20 bzw. 30 eine periodische (inkrementale) Messteilung (mit jeweils mindestens einer Referenzmarke) vorgesehen ist, die aus einer Vielzahl entlang der jeweiligen Raumrichtung x bzw. y periodisch hintereinander angeordneter Teilungsstriche besteht. Die Messrichtung x bzw. y der jeweiligen Längenmesseinrichtung 2 oder 3 wird danach bestimmt durch die Erstreckungsrichtung des Maßstabes 20 bzw. 30 der jeweiligen Längenmesseinrichtung 2, 3, der mit der Bewegungsrichtung des beweglichen Führungsteiles 21 oder 31 der jeweiligen Längenmesseinrichtung 2, 3 zusammenfällt.

Alternativ können die Maßstäbe 20, 30 auch jeweils mit einer absoluten Codierung versehen sein, die sofort nach Inbetriebnahme eine gültige Position liefern und somit keine Referenzfahrt zu einer Referenzmarke erfordern.

Die Abtasteinrichtung 15 bzw. genauer deren zur Abtastung der Messplatte 10 vorgesehener Kopf ist bevorzugt im Schnittpunkt der Längsachsen 200, 300 der beiden Maßstäbe 20, 30 angeordnet, also in der linearen Verlängerung der beiden Maßstäbe 20, 30 über dem Messtisch 1 und insbesondere der Messplatte 10. Eine solche Anordnung der Maßstäbe 20, 30 bezüglich der Abtasteinrichtung 15 dient dazu, frei von Winkelfehlern der Kreuzführung 11, 16 zu messen und gegebenenfalls positionieren zu können; dies entspricht einer Abbe'schen Anordnung.

Die Abtastung der Maßstäbe 20, 30 der beiden Längenmesseinrichtungen 2, 3 erfolgt mittels jeweils eines zugeordneten, ortsfesten, das heißt nicht gemeinsam mit dem Messtisch 1 bewegbaren Abtastkopfes 25 bzw. 35, wodurch das Ausmaß der Bewegung des jeweiligen längsbeweglichen Führungsteiles 21, 31 der Längenmesseinrichtungen 2, 3 zusammen mit dem Messtisch 1 entlang der jeweiligen Messrichtung x bzw. y bestimmbar ist.

Ein erstes der beiden längsbeweglichen Führungsteile 21, 31 ist über einen Verbindungsabschnitt 22 sowie einen am Verbindungsabschnitt 22 vorgesehenen Umgriff 24 mit dem Messtisch 1, genauer mit dessen Oberplatte 11, und daher (über den Messtisch 1 bzw. dessen Oberplatte 11) mit der Messplatte 10 verbunden, indem der Umgriff 24 einen zugeordneten Befestigungsbereich 14 des Messtisches 1 umgreift.

Der Umgriff 24 der Längenmesseinrichtung 2 sowie der zugeordnete Befestigungsbereich 14 des Messtisches 1 sind dabei so gestaltet, dass bei einer Bewegung des Messtisches 1 entlang der Messrichtung x der betrachteten Längenmesseinrichtung 2 das bewegliche Führungsteil 21 sowie der zugeordnete Maßstab 20 der Längenmesseinrichtung 2 als bewegliche Komponenten der Längenmesseinrichtung gemeinsam mit der Messplatte 10 entlang der ersten Raumrichtung x als Messrichtung bewegt werden. Umgekehrt wird jedoch das bewegliche Führungsteil 21 der betrachteten Längenmesseinrichtung 2 bei einer Bewegung der Messplatte 10 entlang der anderen Raumrichtung y, die senkrecht zur Messrichtung x der betrachteten Längenmessrichtung 2 verläuft, nicht mitgenommen.

Die Kopplung der der ersten Raumrichtung x zugeordneten Längenmesseinrichtung 2 mit dem Messtisch 1 über einen Umgriff 24, so dass deren bewegliches Führungsteil 21 lediglich bei einer Bewegung der Messplatte 10 entlang der zugeordneten ersten Raumrichtung x nicht aber bei einer Bewegung der Messplatte 10 entlang der anderen, zweiten Raumrichtung y mitgenommen wird, ist deshalb erforderlich, weil die Kopplung der ersten Längenmesseinrichtung 2 an den Messtisch 1 über dessen Oberplatte 11 erfolgt, die entlang beider Raumrichtungen x, y beweglich ist, weil sie entlang der ersten Raumrichtung x beweglich auf der wiederum entlang der zweiten Raumrichtung y beweglichen Unterplatte 16 lagert.

Die Kopplung der der zweiten Raumrichtung y zugeordneten Längenmesseinrichtung 3, mit der Bewegungen der Messplatte 10 entlang der zweiten Messrichtung y bestimmt werden, erfolgt demgegenüber direkt durch (starre) Anbindung eines Verbindungsabschnittes 32 des längsbeweglichen Führungsteiles 31 an die lediglich entlang der zweiten Raumrichtung y bewegbare Tischkomponente, also die Unterplatte 16. Da sich die Tischkomponente 16, an der das Führungsteil 31 über den Verbindungsabschnitt 32 befestigt ist, ohnehin nur entlang der der zweiten Längenmesseinrichtung 3 als Messrichtung zugeordneten Raumrichtung y bewegen kann, ist es hier nicht notwendig, eine Kopplung über einen Umgriff vorzusehen, der Relativbewegungen der entsprechenden Tischkomponente 16 relativ zu dem besagten Führungsteil 31 entlang einer anderen Richtung (x) zuließe.

Die beiden Messeinrichtungen 2, 3 sind also - einerseits über einen Umgriff 24 und den zugeordneten Befestigungsbereich 14 des Messtisches 1 bzw. der Oberplatte 11 und andererseits durch direkte Anbindung an die Unterplatte 11 des Messtisches - derart (indirekt) mit der Messplatte 10 des Messtisches 1 verbunden, dass bei einer Bewegung der Messplatte 10 entlang einer Richtung, die der Messrichtung x bzw. y der jeweiligen Längenmesseinrichtung 2, 3 entspricht, das längsbewegliche Führungsteil 21 bzw. 31 und der zugeordnete Maßstab 20 bzw. 30 der Messeinrichtung 2, 3 gemeinsam mit der Messplatte 10 bewegt werden. Bei einer Bewegung der auf der Oberplatte 11 des Messtisches 1 fixierten Messplatte 10 entlang einer Raumrichtung y bzw. x, die senkrecht zur Messrichtung x bzw. y der jeweiligen Längenmesseinrichtung 2, 3 verläuft, wird das bewegliche Führungsteil 21 bzw. 31 der jeweiligen Längenmesseinrichtung 2, 3 demgegenüber nicht gemeinsam mit dem Messtisch 1 bewegt. Hierzu ist der Befestigungsbereich 14 des Messtisches 1 als Längsführung ausgebildet, die mit dem der entsprechenden Längenmesseinrichtung 2 zugeordnet Umgriff 24 längsbeweglich in Eingriff steht, wobei sich der einer Längenmesseinrichtung 2 zugeordnete Befestigungsbereich 14 des Messtisches 1 mit seiner Führungsrichtung senkrecht zur Messrichtung x der zugeordneten Längenmesseinrichtung 2 erstreckt.

Im Ergebnis wird also die genannte Relativbewegung der Messplatte 1 bezüglich jeder der beiden Längenmesseinrichtungen 2, 3 entlang einer Richtung senkrecht zur Messrichtung x bzw. y der jeweiligen Längenmesseinrichtung 2, 3 ermöglicht; und es wird die Längenmesseinrichtungen 2, 3 von Querbewegungen der Messplatte 10 bezüglich der Messrichtung x bzw. y der jeweiligen Längenmesseinrichtung 2, 3 entkoppelt.

Alternativ können auch beide längsbewegliche Führungsteile 21, 31 über jeweils einen Umgriff mit der entlang beider Raumrichtungen x, y beweglichen Oberplatte 11 des Messtisches 1 gekoppelt sein, indem die zweite Längenmesseinrichtung 3 in entsprechender Weise an die Oberplatte 11 gekoppelt wird, wie für die erste Längenmesseinrichtung 2 in den Figuren 2a bis 2c dargestellt.

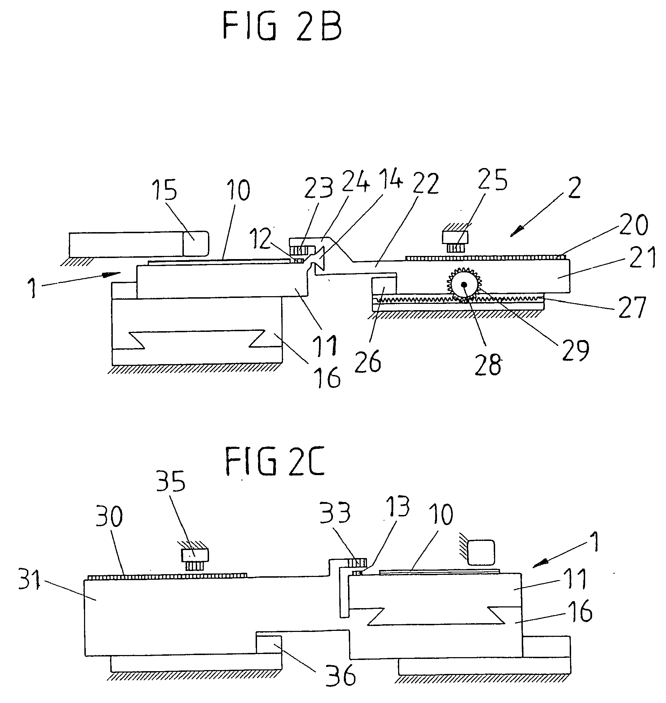

In dem in den Figuren 1, 2a, 2b und 2c dargestellten Ausführungsbeispiel wird der Messtisch 1 für eine Bewegung entlang der beiden Raumrichtungen x, y nicht unmittelbar angetrieben; vielmehr sind jeder der beiden Längenmesseinrichtungen 2, 3 Antriebsmittel zugeordnet, mit denen eine Bewegung des längsbeweglichen Führungsteiles 21 bzw. 31 der jeweiligen Längenmesseinrichtung 2, 3 bezüglich des zugeordneten ortsfesten Führungsteiles 26, 36 möglich ist. Die jeweiligen Antriebsmittel umfassen eine am ortsfesten Führungsteil 26 bzw. 36 der jeweiligen Längenmesseinrichtung 2, 3 angeordnete bzw. ausgebildete und entlang der jeweiligen Messrichtung x bzw. y erstreckte Zahnstange 27, 37, mit der ein am jeweiligen längsbeweglichen Führungsteil 21 bzw. 31 auf einer drehbaren Welle 28 bzw. 38 gelagertes Zahnrad 29 oder 39 in Eingriff steht. Durch Drehung der jeweiligen Antriebswelle 28 bzw. 38 über einen zugeordneten (in den Figuren nicht mit dargestellten) Antriebsmotor wird eine Drehbewegung des am jeweiligen längsbeweglichen Führungsteil 21 bzw. 31 drehbar gelagerten Zahnrades 29 oder 39 ausgelöst, wobei dieses mit seiner Außenverzahnung auf der Zahnstange 27 bzw. 37 des zugeordneten ortsfesten Führungsteiles 26, 36 abrollt. Hierdurch wird - je nach Drehrichtung des jeweiligen Zahnrades 29 bzw. 39 - eine Relativbewegung des längsbeweglichen Führungsteiles 21, 31 der jeweiligen Längenmesseinrichtung 2, 3 bezüglich des ortsfesten Führungsteiles 26, 36 entlang der jeweils zugeordneten Raumrichtung bzw. Messrichtung x, y erzeugt, wobei die über den Messtisch 1 mit dem längsbeweglichen Führungsteil 21, 31 der Längenmesseinrichtungen 2, 3 verbundene Messplatte 10 mitgenommen wird. Alternativ kann den Längenmesseinrichtungen 2, 3 auch jeweils ein Linearmotor zugeordnet sein, um eine Relativbewegung zu erzeugen.

Die vorstehend beschriebenen Zahnstangenantriebe sollen dabei lediglich dazu dienen, allgemein einen Linearantrieb zu repräsentieren, der die Erzeugung einer linearen Bewegung des jeweiligen längsbeweglichen Führungsteiles 21 bzw. 31 bezüglich des zugeordneten ortsfesten Führungsteiles 26 oder 36 ermöglicht. Es können demzufolge auch andere Linearantriebe als Zahnstangenantriebe zur Erzeugung der Längsbewegung des jeweiligen längsverschieblichen Führungsteiles 21, 31 verwendet werden, die sich jedoch in der Regel zeichnerisch nicht so einfach darstellen lassen. Hinsichtlich eines vorteilhaft verwendbaren Linearantriebes wird beispielsweise auf die EP 0 793 870 A1 verwiesen.

Die in den Figuren 1 bis 2c dargestellte Anordnung hat dabei den Vorteil, dass wegen der Zuordnung der Antriebsmittel, mit denen die Bewegung des Messtisches 1 sowie der beiden Maßstäbe 20, 30 entlang der beiden Raumrichtungen x, y erzeugt wird, zu den Längenmesseinrichtungen 2, 3 am Messtisch 1 selbst kein Wärmeeintrag erfolgt.

Neben der Messplatte 10 erstrecken sich auf dem Messtisch 1, genauer auf dessen die Messplatte 10 tragender Oberplatte 11, zwei inkrementale Messteilungen 12, 13, die jeweils einer der beiden Längenmessrichtungen 2, 3 zugeordnet sind. Die inkrementalen Messteilungen 12, 13 bestehen aus einer Vielzahl entlang der Messrichtung x bzw. y der jeweils zugeordneten Längenmesseinrichtung 2 oder 3 hintereinander angeordneter Teilungsstriche, die durch einen über den jeweiligen Verbindungsabschnitt 22, 32 mit dem längsbeweglichen Führungsteil 21, 31 der zugeordneten Längenmesseinrichtung 2, 3 starr verbundenen Messkopf 23 bzw. 33 abtastbar sind. Durch Abtastung der neben der Messplatte 10 am Messtisch 1 vorgesehenen Messteilungen 12, 13 mittels der gemeinsam mit den Maßstäben 20, 30 der Längenmesseinrichtungen 2, 3 bewegbaren Messköpfe 23, 33 lassen sich Abstandsänderungen der Maßstäbe 20, 30 von dem Messtisch 1 (bzw. von dessen Oberplatte 11 und somit von der Messplatte 10) entlang der jeweiligen Messrichtung x bzw. y erfassen, die etwa auf vorhandenes Spiel beim Zusammenwirken eines Umgriffs 24 mit dem zugeordneten Befestigungsbereich 14 zurückzuführen sein können. Hierdurch lassen sich Schwankungen im Abstand zwischen dem jeweiligen Maßstab 20, 30 der Längenmessrichtungen 2, 3 und dem Messtisch 1 kompensieren. Mit anderen Worten ausgedrückt setzt sich eine Messung des Ausmaßes einer Bewegung der Messplatte 10 entlang der einen und/oder anderen Raumrichtung x, y zusammen aus einem Messergebnis der jeweiligen Längenmesseinrichtung 2 bzw. 3, erzeugt durch Abtastung des jeweiligen Maßstabes 20 bzw. 30 mittels des zugeordneten Abtastkopfes 25, 35, sowie aus der mit einer Bewegung der Messplatte 10 entlang der einen oder anderen Richtung x, y möglicherweise einhergehenden Abstandsänderung zwischen dem jeweiligen Maßstab 20, 30 und der Messplatte 10, erfasst durch Abtastung der neben der Messplatte vorgesehenen Messteilungen 12, 13 mittels des jeweiligen Messkopfes 23, 33. Die neben der Messplatte 10 vorgesehenen Messteilungen 12, 13 dienen dabei als so genannte Geradheitsstäbe auch dazu, Auswirkungen von Geradheitsabweichungen und einer eventuellen Lose der Kreuzführung 11, 16 auf die Messergebnisse zu vermeiden.

Die Positionswerte für eine jeweilige Raumrichtung x, y ergeben sich jeweils als Summe $x_l+x_g$ bzw. $y_l+y_g$ eines Messergebnisses $x_l$ bzw. $y_l$ der jeweiligen Längenmesseinrichtung 2, 3 und eines Messergebnisses $x_g$ bzw. $y_g$ der Mittel 12, 23; 13, 33 zur Erfassung von Abstandsänderungen zwischen dem Maßstab 20, 30 der jeweiligen Längenmesseinrichtung 2, 3 und dem Messtisch 1 bzw. genauer der Messplatte 10.

Im Fall einer Anwendung der Längenmesseinrichtungen 2, 3 zur Prüfung der Genauigkeit einer an der Messplatte 10 vorgesehenen und mittels einer zugeordneten Abtasteinrichtung 15 abgetasteten Maßverkörperung (zum Beispiel in Form einer Kreuzgitterteilung), wird die der Maßverkörperung der Messplatte 10 zugeordnete Abtasteinrichtung 15 bevorzugt starr mit den Abtastköpfen 25, 35 der beiden Längenmesseinrichtungen 2, 3 verbunden. Weiterhin befindet sich die Abtasteinrichtung 15 bevorzugt an einer Stelle oberhalb der Messplatte 10, die mit einem Schnittpunkt der Messachsen der beiden Längenmesseinrichtungen 2, 3 zusammenfällt.

Die in den Figuren 1 bis 2c dargestellte Anordnung zur Positionsbestimmung kann jedoch nicht nur als Messanordnung zur Kalibrierung einer Messplatte 10 dienen, sondern auch als Anordnung zur hochgenauen Positionierung einer Bearbeitungseinheit, wie zum Beispiel einer Belichtungseinheit, einer Laseranordnung oder eines Fräsers über einem mittels des Tisches 1 zu positionierenden und mittels der Bearbeitungseinheit zu bearbeitendem Objekt.

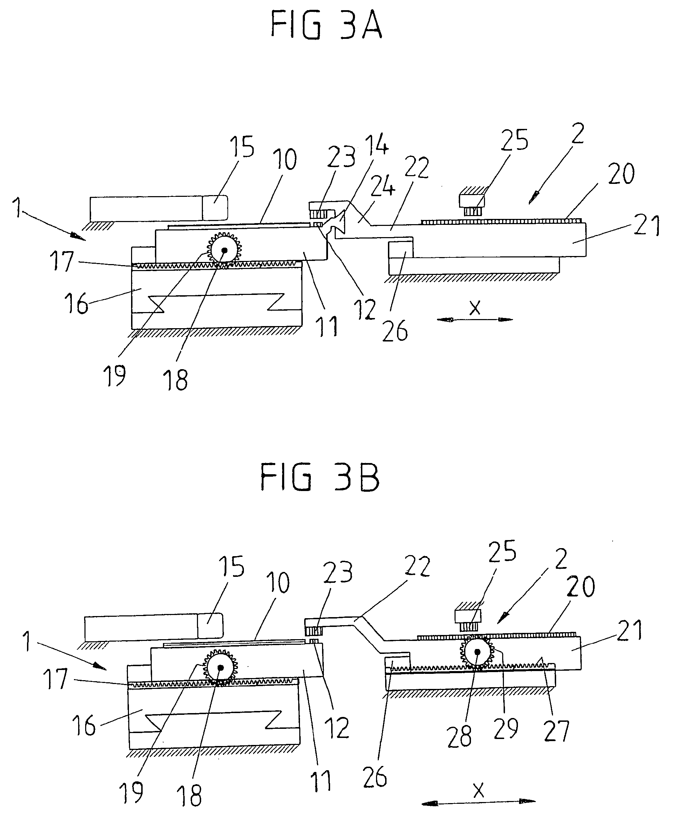

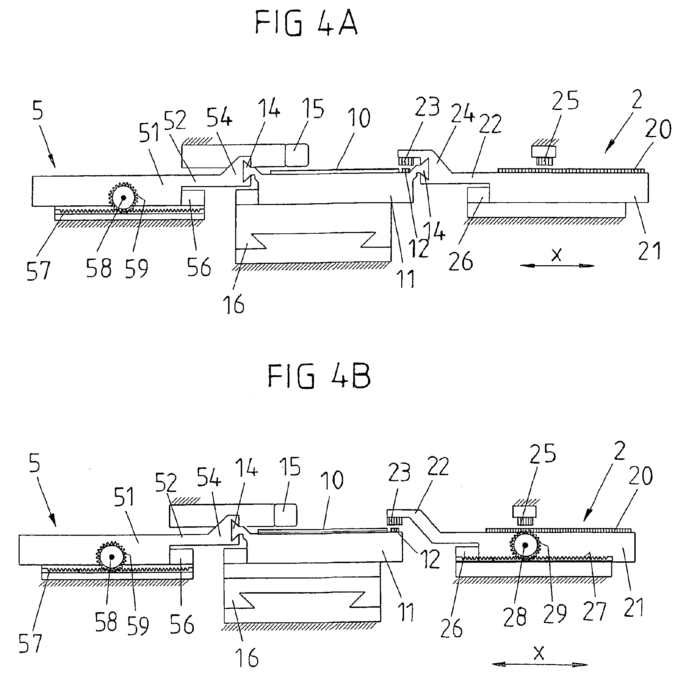

In den Figuren 3a, 3b, 4a und 4b sind unterschiedliche Abwandlungen der Anordnung aus den Figuren 1 bis 2c dargestellt, und zwar hinsichtlich der Antriebsmittel, über die eine gemeinsame Bewegung des Messtisches 1 bzw. der Messplatte 10 einerseits sowie der Maßstäbe 20, 30 andererseits bewirkt wird. Dies wird nachfolgend anhand der Figuren 3a bis 4b, jeweils ausgehend von der Seitenansicht gemäß Fig. 2b, beispielhaft anhand der Längenmesseinrichtung 2 erläutert werden, mit der sich die Position des Messtisches 1 bzw. von dessen Oberplatte 11 und somit der Messplatte 10 entlang der ersten Raumrichtung x (Verschieberichtung) bestimmen lässt. Die nachfolgenden Betrachtungen gelten jedoch jeweils in gleicher Weise auch für die zweite Längenmesseinrichtung 3, die zur Bestimmung der Position der Oberplatte 11 des Messtisches 1 bzw. der Messplatte 10 entlang der zweiten Raumrichtung y vorgesehen ist.

Die in Fig. 3a gezeigte Anordnung unterscheidet sich von der in den Figuren 1 bis 2c dargestellten dadurch, dass die zur Erzeugung der Bewegung des Messtisches 1 sowie der Maßstäbe 20, 30 dienenden Antriebsmittel nicht den Längenmesseinrichtungen 2, 3, sondern dem Messtisch 1 zugeordnet sind, wobei in Fig. 3a speziell die Antriebsmittel erkennbar sind, die zur Erzeugung einer Bewegung entlang der ersten Richtung x dienen.

Die Antriebsmittel selbst umfassen dabei, wie auch im Fall der anhand der Figuren 1 bis 2c dargestellten Anordnung, für jede Raumrichtung eine Zahnstange 17 sowie ein drehfest auf einer Welle 18 gelagertes und mit der Zahnstange 17 in Eingriff stehendes Zahnrad 19.

Es gilt auch für die Figuren 3a bis 4b die oben im Zusammenhang mit den Figuren 1 bis 2c getroffene Feststellung, dass die in den einzelnen Zeichnungen dargestellten Zahnstangenantriebe jeweils einen Linearantrieb repräsentieren sollen, der auch einen ganz anderen Aufbau als ein Zahnstangenantrieb haben kann.

In der beispielhaften Darstellung der Fig. 3a sind die Zahnstange 17 einerseits und das Zahnrad 19 andererseits an zwei entlang der ersten Raumrichtung x zueinander verschiebbaren Elementen der Kreuzführung 11, 16 des Messtisches 1 angeordnet, um eine Bewegung (Verschiebung) entlang der ersten Raumrichtung x erzeugen zu können. Konkret kann hiermit eine entlang der ersten Raumrichtung x verschiebbare und die Messplatte 10 unmittelbar tragende Tischkomponente 11 entlang jener Raumrichtung x bewegt werden.

In gleicher Weise aufgebaute Antriebsmittel sind (in Fig. 3a nicht erkennbar) vorgesehen, um eine die erste Tischkomponente 11 tragende zweite Tischkomponente 16 entlang der zweiten Raumrichtung y verschieben zu können. In Abweichung von der Anordnung aus den Figuren 1 bis 2c werden hier jeweils die längsverschieblichen Führungsteile (zum Beispiel 21) und der jeweils zugeordnete Maßstab (zum Beispiel 20) der Längenmesseinrichtungen 2, 3 bei einer Bewegung der Messplatte 10 entlang einer jeweiligen Raumrichtung x oder y (ausgelöst durch die am Messtisch wirkenden Antriebsmittel) passiv mitgenommen.

Fig. 3b zeigt eine Weiterbildung der Anordnungen aus den Figuren 2b und 3a, wobei hier sowohl dem Messtisch 1 als auch den Längenmesseinrichtungen (zum Beispiel 2) jeweils Antriebsmittel für eine Bewegung entlang der ersten bzw. zweiten Raumrichtung x, y zugeordnet sind. In diesem Fall sind die gemeinsam mit dem zu messenden Objekt (Messplatte 10) bewegbaren Komponenten der Längenmesseinrichtungen 2, 3 (zum Beispiel der der ersten Raumrichtung x zugeordnete Maßstab 20) nicht mit dem Messtisch 1 verbunden. Stattdessen sind die messtischseitigen Antriebsmittel einerseits sowie die längenmesseinrichtungsseitigen Antriebsmittel andererseits derart synchronisiert, dass entlang beider Raumrichtungen x, y jeweils eine gleichmäßige (synchrone) Bewegung des Messtisches 1 einerseits und der Längenmesseinrichtungen 2, 3 andererseits erfolgt. Etwaige Abweichungen von einer gleichmäßigen Bewegung können auch hier wiederum dadurch ausgeglichen werden, dass über die längenmesseinrichtungsseitigen Messköpfe 23, 33 und die zugeordneten messtischseitigen Messteilungen 12, 13 Änderungen des Abstandes zwischen den Längenmesseinrichtungen 2, 3 und dem Messtisch 1 entlang der jeweiligen Raumrichtung x oder y (Messrichtung) erfasst und somit kompensiert werden können.

Fig. 4a zeigt eine Abwandlung des Ausführungsbeispieles aus Fig. 3a, wobei der Unterschied darin besteht, dass die Antriebsmittel nicht unmittelbar dem Messtisch 1 zugeordnet sind, sondern dass dem Messtisch 1 für jede der beiden Raumrichtungen x, y jeweils ein Antriebsschlitten 5 zugeordnet ist, der ein stationäres, ortsfestes Führungsteil 56 und ein hieran entlang der jeweiligen Raumrichtung x oder y geführtes längsbewegliches Führungsteil 51 umfasst, wobei dem einen, stationären Führungsteil 56 eine Zahnstange 57 und dem anderen, längsbeweglichen Führungsteil 51 ein drehfest auf einer Welle 58 gelagertes und mit der Zahnstange 57 in Eingriff stehendes Zahnrad 59 zugeordnet ist. Indem die Zahnstange 57 durch die Welle 58 des Zahnrades 59 über einen Rotationsmotor angetrieben wird, lässt sich so eine Längsbewegung des längsverschieblichen Führungsteiles 51 bezüglich des stationären, ortsfesten Führungsteiles 56 erzeugen.

Das längsbewegliche Führungsteil 51 ist über einen Verbindungsbereich 52 und einen Umgriff 54 mit einem Befestigungsbereich 14 des Messtisches 1 verbunden, und zwar in der gleichen Weise, wie weiter oben anhand des Umgriffs 24 der einen Längenmesseinrichtung 2 sowie des zugeordneten Befestigungsbereiches 14 des Messtisches 1 beschrieben.

Demnach wird der Messtisch 1 bzw. die Messplatte 10 bei der in Fig. 4a dargestellten Anordnung entlang der beiden Raumrichtungen x, y durch jeweils einen Antriebsschlitten 5 geschleppt, der ein längsbewegliches, mit dem Messtisch verbundenes Führungsteil 51 aufweist. Da außerdem auch die gemeinsam mit dem Messtisch 1 bzw. der Messplatte 10 bewegbaren Komponenten der Längenmesseinrichtungen 2, 3 (Maßstäbe 20, 30) in der oben anhand der Figuren 1a bis 2c beschriebenen Weise mit dem Messtisch 1 verbunden sind, werden diese bei einer durch die Antriebsschlitten 5 hervorgerufenen Bewegung des Messtisches 1 bzw. von dessen Oberplatte 11 und somit der Messplatte 10 jeweils entlang der entsprechenden Raumrichtung x und/oder y mitgenommen.

Fig. 4b zeigt eine Abwandlung der Anordnung aus Fig. 4a, wobei den Längenmesseinrichtungen 2, 3, wie in Fig. 4b beispielhaft anhand der entlang der ersten Raumrichtung x wirkenden Längenmesseinrichtung 2 dargestellt, jeweils eigene Antriebsmittel zugeordnet sind. Diese sind mit den auf den Messtisch 1 einwirkenden Antriebsmittel des jeweiligen Antriebsschlittens 5 synchronisiert, so dass eine im Wesentlichen synchrone Bewegung der Antriebsschlitten 5 sowie des Messtisches 1 einerseits und der beweglichen Komponenten 20, 30 der Längenmesseinrichtungen 2, 3 andererseits entlang der jeweiligen Raumrichtung 2 bzw. 3 erfolgen kann. Eine Verbindung zwischen dem Messtisch 1 und den gemeinsam mit dem Messtisch 1 bewegbaren Komponenten (Maßstäbe 20, 30) der Längenmesseinrichtungen 2, 3 ist in diesem Fall nicht erforderlich.

Die in den Figuren 4a und 4b gezeigten Anordnungen weisen wegen der Verwendung separater Antriebsschlitten zur Bewegung des Messtisches 1 ebenso wie die in Fig. 2b gezeigte Anordnung den Vorteil auf, dass kein Wärmeeintrag am Messtisch 1 erfolgt. Allerdings sind hierfür separate Antriebsschlitten 5, nämlich ein Antriebsschlitten 5 für jede der beiden Raumrichtungen x, y erforderlich, was einen erhöhten Raumbedarf der Gesamtanordnung nach sich zieht.

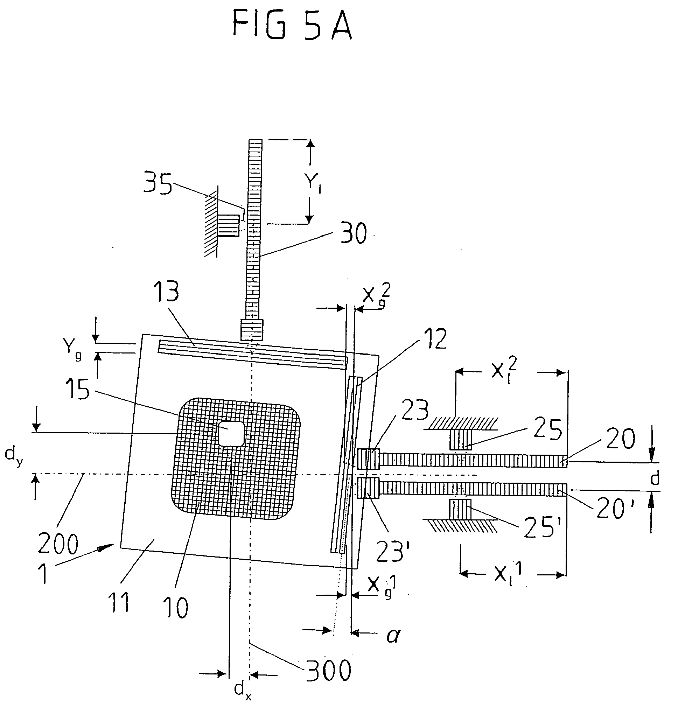

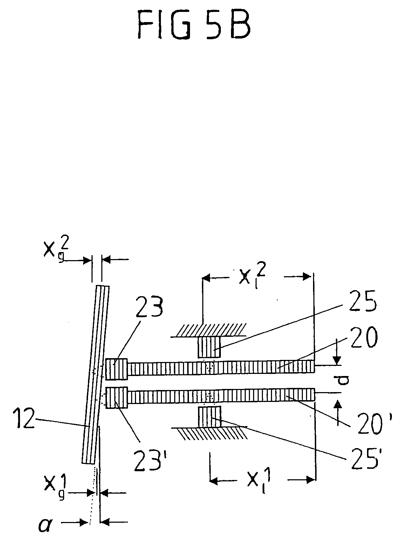

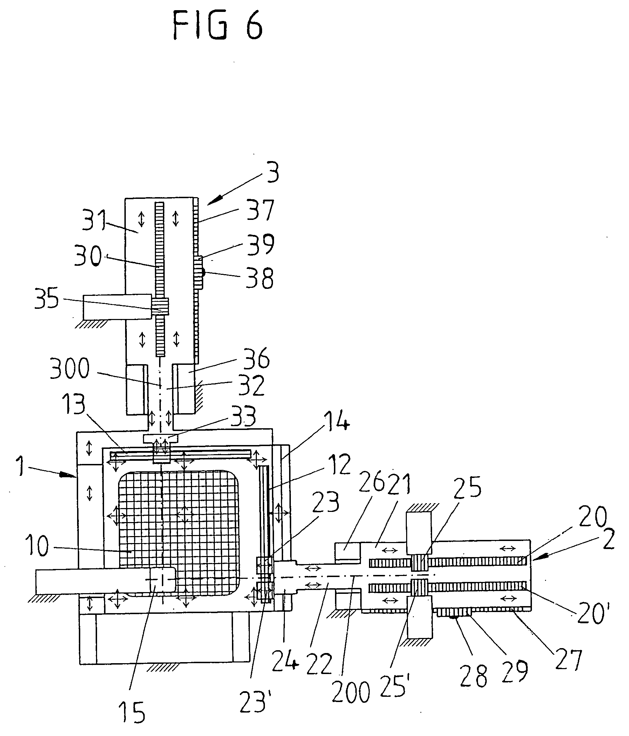

In den Figuren 5a, 5b und 6 ist eine Weiterbildung der Anordnung aus den Figuren 1 bis 2c dargestellt, wobei der Unterschied darin besteht, dass die der ersten Raumrichtung x zugeordnete Längenmesseinrichtung 2 zwei parallel zueinander angeordnete und entlang der zweiten Raumrichtung y voneinander beabstandete (Abstand d), auf einem gemeinsamen längsbeweglichen Führungsteil 21 geführte Maßstäbe 20, 20' umfasst, denen jeweils ein Abtastkopf 25, 25' zur Abtastung des zugehörigen Maßstabes 20, 20' sowie ein Messkopf 23, 23' zur Abtastung der zugehörigen, am Messtisch 1 neben der Messplatte 10 verlaufenden Messteilung 12 zugeordnet ist.

Hiermit lassen sich Winkelfehler $\alpha$ des Messtisches 1 bzw. genauer der Oberplatte 11 und somit der Messplatte 10 bestimmen und bei der Auswertung der Messergebnisse bzw. beim Bearbeiten eines Objektes außerhalb einer so genannten Abbe'schen Anordnung berücksichtigen. Es ist dann also nicht erforderlich, beim Messen oder Bearbeiten die Abtasteinrichtung bzw. das Werkzeug genau im Schnittpunkt der Messachsen 200, 300 (Abbe'sche Anordnung) anzuordnen, was mit einem erheblichen baulichen Aufwand verbunden sein kann. Etwaige Winkelfehler können vielmehr rechnerisch korrigiert werden.

Aus den in Figur 5a und 5b angedeuteten Messwerten $x^1_l$ und $x^2_l$, die durch Abtastung der beiden der ersten Raumrichtung x zugeordneten Maßstäbe 20, 20' mittels Abtastköpfen 25, 25' gewonnen werden, sowie aus den Messwerten $x^1_g$ und $x^2_g$, die durch Abtastung der der ersten Raumrichtung x zugeordneten Messteilung 12 mittels der Messköpfe 23, 23' gewonnen werden, ergibt sich der Winkelfehler $\alpha$ der Kreuzführung zu

$$\alpha = (x^1_l + x^1_g - x^2_l - x^2_g)/d.$$

Bei einer räumlichen Abweichung $d_x$, dy der Abtasteinrichtung 15 bzw. einer anstelle der Abtasteinrichtung 15 verwendeten Bearbeitungseinheit vom Schnittpunkt der Messachsen 200, 300 entlang der beiden Raumrichtungen x, y ergibt sich hieraus für die winkelkorrigierten Positionswerte:

$$x = (x^1_l + x^1_g + x^2_l + x^2_g)/2 - \alpha^* d_y$$

$$y = y_l + y_g - \alpha^* d_x.$$

Die so gewonnenen Informationen über den Winkelfehler $\alpha$ des Messtisches 1 bzw. der Oberplatte 11 können verwendet werden, um ein auf der Oberplatte 11 anzuordnendes, zu bearbeitendes Objekt, wie zum Beispiel eine fotoempfindlich beschichtete und mit einer Fotomaske zu belichtende Platte bzw. den Messtisch 1 selbst, so auszurichten, dass die Winkelfehler kompensiert werden. Natürlich kann die Information über den Winkelfehler auch dazu verwendet werden, die Photomaske gemäß dem Winkelfehler auszurichten. In jedem Fall ist es möglich, die korrekte Ausrichtung zwischen der photoempfindlich beschichteten Platte und der Fotomaske zu gewährleisten.

So lassen sich unter anderem Messplatten mit Kreuzgitter hochgenau fotolithographisch herstellen. Die anschließende Prüfung der Genauigkeit des Kreuzgitters kann ebenfalls auf einem derartigen Messtisch erfolgen, indem die Längenmesseinrichtungen 2, 3 zur Prüfung der Genauigkeit der entsprechenden Messplatte verwendet werden, wie weiter oben beschrieben.

**Patentansprüche**

1. Vorrichtung zur Bestimmung der Position eines entlang mindestens einer Verschieberichtung bewegbaren Objektes, wobei der oder jeder Verschieberichtung eine Längenmesseinrichtung zur Messung der Position des Objektes entlang der jeweiligen Verschieberichtung zugeordnet ist, die als erste Komponente einen entlang der zugeordneten Verschieberichtung (x, y) erstreckten Maßstab (20, 30) aufweist, mit

   - einem Abtastkopf (25, 35) zum Abtasten des Maßstabes (20, 30) als zweiter Komponente der jeweiligen Längenmesseinrichtung (2, 3), so dass eine Änderung der Position des Maßstabes (20, 30) bezüglich des Abtastkopfes (25, 35) entlang der zugeordneten Verschieberichtung (x, y) messbar ist, wobei eine der beiden Komponenten (20, 25; 30, 35) der jeweiligen Längenmesseinrichtung (2, 3) bei einer Bewegung des zu messenden Objektes (10) gemeinsam mit diesem entlang der jeweiligen Verschieberichtung (x, y) bewegt wird, und
   - **dadurch gekennzeichnet, dass** die Vorrichtung ferner eine Einrichtung (12, 23; 13, 33) zur Bestimmung des Abstandes der gemeinsam mit dem zu messenden Objekt (10) bewegbaren Komponente (20, 30) der jeweiligen Längenmesseinrichtung (2, 3) von dem zu messenden Objekt (10) entlang der Erstreckungsrichtung (x, y) des Maßstabes (20, 30) der Längenmesseinrichtung (2, 3) aufweist,

   wobei
   die Einrichtung (12, 23; 13, 33) zur Bestimmung des Abstandes der gemeinsam mit dem zu messenden Objekt (10) bewegbaren Komponente (20, 30) der jeweiligen Längenmesseinrichtung (2, 3) von dem zu messenden Objekt (10) eine Messteilung (12, 13) als erste Baugruppe und einen zugeordneten Messkopf (23, 33) als zweite Baugruppe umfasst, wobei eine der beiden Baugruppen (12, 23; 13, 33) an dem zu messenden Objekt (10) vorgesehen ist und die andere der beiden Baugruppen (12, 23; 13, 33) an der gemeinsam mit dem zu messenden Objekt (10) bewegbaren Komponente (20, 30) der Längenmesseinrichtung (2, 3) vorgesehen ist.

2. Vorrichtung nach Anspruch 1, **dadurch gekennzeichnet, dass** sie zur Bestimmung der Position eines entlang zweier linear unabhängiger Verschieberichtungen (x, y) bewegbaren Objektes (10) ausgebildet und vorgesehen ist und dass jeder Verschieberichtung (x, y) des zu messenden Objektes (10) eine Längenmesseinrichtung (2, 3) mit einem entlang der jeweiligen Verschieberichtung (x, y) erstreckten Maßstab (20, 30) zugeordnet ist.

3. Vorrichtung nach Anspruch 2, **dadurch gekennzeichnet, dass** die nicht gemeinsam mit dem zu messenden Objekt (10) bewegbaren Komponenten (25, 35) der beiden Längenmesseinrichtungen (2, 3) starr miteinander verbunden sind.

4. Vorrichtung nach einem der vorhergehenden Ansprüche, **dadurch gekennzeichnet, dass** der Maßstab (20, 30) die gemeinsam mit dem zu messenden Objekt (10) bewegbare Komponente der jeweiligen Längenmesseinrichtung (2, 3) bildet.

5. Vorrichtung nach Anspruch 3 und 4, **dadurch gekennzeichnet, dass** die Abtastköpfe (25, 35) der beiden Längenmesseinrichtungen (2, 3) starr miteinander verbunden sind.

6. Vorrichtung nach einem der vorhergehenden Ansprüche, **dadurch gekennzeichnet, dass** die der jeweiligen Längenmesseinrichtung (2, 3) zur Abstandsmessung zugeordnete Messteilung (12, 13) an dem zu messenden Objekt (10) vorgesehen ist.

7. Vorrichtung nach einem der vorhergehenden Ansprüche, **dadurch gekennzeichnet, dass** der der jeweiligen Längenmesseinrichtung (2, 3) zur Abstandsmessung zugeordnete Messkopf (23, 33) mit der gemeinsam mit dem zu messenden Objekt (10) bewegbaren Komponente (20, 30) der Längenmesseinrichtung (2, 3) verbunden ist.

8. Vorrichtung nach Anspruch 4 und 7, **dadurch gekennzeichnet, dass** der der jeweiligen Längenmesseinrichtung (2, 3) zur Abstandsmessung zugeordnete Messkopf (23, 33) mit dem Maßstab (20, 30) der Längenmesseinrichtung (2, 3) verbunden ist.

**9.** Vorrichtung nach einem der vorhergehenden Ansprüche, **dadurch gekennzeichnet, dass** die der jeweiligen Längenmesseinrichtung (2, 3) zur Abstandsmessung zugeordnete Messteilung (12, 13) eine Messrichtung definiert, die mit der Messrichtung (x, y) der zugeordneten Längenmesseinrichtung (2, 3) zusammenfällt.

**10.** Vorrichtung nach einem der vorhergehenden Ansprüche, **dadurch gekennzeichnet, dass** der Maßstab (20, 30) der jeweiligen Längenmesseinrichtung (2, 3) eine Inkrementalspur aufweist.

**11.** Vorrichtung nach einem der vorhergehenden Ansprüche, **dadurch gekennzeichnet, dass** die der oder jeder Längenmesseinrichtung (2, 3) zur Abstandsmessung zugeordnete Messteilung (12, 13) als Inkrementalteilung ausgebildet ist.

**Claims**

**1.** Apparatus for determining the position of an object that is movable in at least one displacement direction, wherein the, or each, displacement direction is associated with a length measuring device for measuring the position of the object along the respective displacement direction, which length measuring device has, as a first component, a graduated scale (20, 30) which extends along the associated displacement direction (x, y), having
a sensing head (25, 35) for sensing the graduated scale (20, 30) as a second component of the respective length measuring device (2, 3), such that a change in the position of the graduated scale (20, 30) is measurable with respect to the sensing head (25, 35) along the associated displacement direction (x, y), wherein during a movement of the object (10) to be measured, one of the two components (20, 25; 30, 35) of the respective length measurement device (2, 3) is moved together with said object along the respective displacement direction (x, y), and **characterized in that** the apparatus furthermore has a device (12, 23; 13, 33) for determining the distance of that component (20, 30) of the respective length measuring device (2, 3) which is movable together with the object (10) to be measured from the object (10) to be measured along the extent direction (x, y) of the graduated scale (20, 30) of the length measuring device (2, 3),
wherein the device (12, 23; 13, 33) for determining the distance of that component (20, 30) of the respective length measurement device (2, 3) which is movable together with the object (10) to be measured from the object (10) to be measured comprises a measurement graduation (12, 13) as a first structural element and an associated measuring head (23, 33) as a second structural element, wherein one of the two structural elements (12, 23; 13, 33) is provided at the object (10) to be measured and the other one of the two structural elements (12, 23; 13, 33) is provided at that component (20, 30) of the length measuring device (2, 3) which is movable together with the object (10) to be measured.

**2.** Apparatus according to Claim 1, **characterized in that** it is designed and provided for determining the position of an object (10) that is movable along two linearly independent displacement directions (x, y) and **in that** each displacement direction (x, y) of the object (10) to be measured is associated with a length measuring device (2, 3) having a graduated scale (20, 30) which extends along the respective displacement direction (x, y).

**3.** Apparatus according to Claim 2, **characterized in that** those components (25, 35) of the two length measuring devices (2, 3) which are not movable together with the object (10) to be measured are rigidly connected to one another.

**4.** Apparatus according to one of the preceding claims, **characterized in that** the graduated scale (20, 30) forms that component of the respective length measuring device (2, 3) which is movable together with the object (10) to be measured.

**5.** Apparatus according to Claim 3 and 4, **characterized in that** the sensing heads (25, 35) of the two length measuring devices (2, 3) are rigidly connected to one another.

**6.** Apparatus according to one of the preceding claims, **characterized in that** the measurement graduation (12, 13) that is associated with the respective length measuring device (2, 3) for distance measurement is provided at the object (10) to be measured.

**7.** Apparatus according to one of the preceding claims, **characterized in that** the measuring head (23, 33) that is associated with the respective length measuring device (2, 3) for distance measurement is connected to that component (20, 30) of the length measuring device (2, 3) which is movable together with the object (10) to be measured.

**8.** Apparatus according to Claim 4 and 7, **characterized in that** the measuring head (23, 33) that is associated with the respective length measuring device (2, 3) for distance measurement is connected to the graduated scale (20, 30) of the length measuring device (2, 3).

**9.** Apparatus according to one of the preceding claims, **characterized in that** the measurement graduation (12, 13) that is associated with the respective length measuring device (2, 3) for distance measurement defines a measurement direction that coincides with the measurement direction (x, y) of the associated length measuring device (2, 3).

10. Apparatus according to one of the preceding claims, **characterized in that** the graduated scale (20, 30) of the respective length measuring device (2, 3) has an incremental track.

11. Apparatus according to one of the preceding claims, **characterized in that** the measurement graduation (12, 13) that is associated with the, or each, length measuring device (2, 3) for distance measurement is designed as an incremental graduation.

## Revendications

1. Dispositif pour déterminer la position d'un objet pouvant se déplacer le long d'au moins une direction de translation, un appareil de mesure de longueur destiné à mesurer la position de l'objet le long de la direction de translation respective étant associé à la ou à chaque direction de translation, lequel possède comme premier composant une règle graduée (20, 30) qui s'étend le long de la direction de translation (x, y) associée, comprenant

   - une tête de palpage (25, 35) destinée à palper la règle graduée (20, 30) en tant que deuxième composant de l'appareil de mesure de longueur (2, 3) respectif, de sorte qu'une modification de la position de la règle graduée (20, 30) par rapport à la tête de palpage (25, 35) le long de la direction de translation (x, y) associée soit mesurable, l'un des deux composants (20, 25 ; 30, 35) de l'appareil de mesure de longueur (2, 3) respectif, lors d'un mouvement de l'objet (10) à mesurer, étant déplacé conjointement avec celui-ci le long de la direction de translation (x, y) respective, et
   - **caractérisé en ce que** le dispositif possède en outre un appareil (12, 23 ; 13, 33) destiné à déterminer l'écart entre le composant (20, 30) de l'appareil de mesure de longueur (2, 3) respectif pouvant se déplacer conjointement avec l'objet (10) à mesurer et l'objet (10) à mesurer le long de la direction de projection (x, y) de la règle graduée (20, 30) de l'appareil de mesure de longueur (2, 3),

   l'appareil (12, 23 ; 13, 33) destiné à déterminer l'écart entre le composant (20, 30) de l'appareil de mesure de longueur (2, 3) respectif pouvant se déplacer conjointement avec l'objet (10) à mesurer et l'objet (10) à mesurer comprenant une graduation de mesure (12, 13) en tant que premier sous-ensemble et une tête de mesure (23, 33) associée en tant que deuxième sous-ensemble, l'un des deux sous-ensembles (12, 23 ; 13, 33) étant prévu sur l'objet (10) à mesurer et l'autre des deux sous-ensembles (12, 23 ; 13, 33) étant prévu sur le composant (20, 30) de l'appareil de mesure de longueur (2, 3) pouvant se déplacer conjointement avec l'objet (10) à mesurer.

2. Dispositif selon la revendication 1, **caractérisé en ce qu'**il est configuré et prévu pour déterminer la position d'un objet (10) pouvant se déplacer le long de deux directions de translation (x, y) linéaires indépendantes, et **en ce qu'**à chaque direction de translation (x, y) de l'objet (10) à mesurer est associé un appareil de mesure de longueur (2, 3) pourvu d'une règle graduée (20, 30) qui s'étend le long de la direction de translation (x, y) respective.

3. Dispositif selon la revendication 2, **caractérisé en ce que** les composants (25, 35) ne pouvant pas se déplacer conjointement avec l'objet (10) à mesurer des deux appareils de mesure de longueur (2, 3) sont reliées de manière rigide l'un à l'autre.

4. Dispositif selon l'une des revendications précédentes, **caractérisé en ce que** la règle graduée (20, 30) forme le composant de l'appareil de mesure de longueur (2, 3) respectif pouvant se déplacer conjointement avec l'objet (10) à mesurer.

5. Dispositif selon les revendications 3 et 4, **caractérisé en ce que** les têtes de palpage (25, 35) des deux appareils de mesure de longueur (2, 3) sont reliées de manière rigide l'une à l'autre.

6. Dispositif selon l'une des revendications précédentes, **caractérisé en ce que** la graduation de mesure (12, 13) associée à l'appareil de mesure de longueur (2, 3) respectif pour la mesure de l'écart est prévue sur l'objet (10) à mesurer.

7. Dispositif selon l'une des revendications précédentes, **caractérisé en ce que** la tête de mesure (23, 33) associée à l'appareil de mesure de longueur (2, 3) respectif pour la mesure de l'écart est reliée au composant (20, 30) de l'appareil de mesure de longueur (2, 3) pouvant se déplacer conjointement avec l'objet (10) à mesurer.

8. Dispositif selon les revendications 4 et 7, **caractérisé en ce que** la tête de mesure (23, 33) associée à l'appareil de mesure de longueur (2, 3) respectif pour la mesure de l'écart est reliée à la règle graduée (20, 30) de l'appareil de mesure de longueur (2, 3).

9. Dispositif selon l'une des revendications précédentes, **caractérisé en ce que** la graduation de mesure (12, 13) associée à l'appareil de mesure de longueur (2, 3) respectif pour la mesure de l'écart définit une direction de mesure qui coïncide avec la direction de mesure (x, y) de l'appareil de mesure de longueur (2, 3) associé.

10. Dispositif selon l'une des revendications précédentes, **caractérisé en ce que** la règle graduée (20, 30) de l'appareil de mesure de longueur (2, 3) respectif possède une piste incrémentale.

11. Dispositif selon l'une des revendications précédentes, **caractérisé en ce que** la graduation de mesure (12, 13) associée au ou à chaque appareil de mesure de longueur (2, 3) respectif pour la mesure de l'écart est réalisée sous la forme d'une graduation incrémentale.

# FIG 1

# FIG 2A

# FIG 2B

# FIG 2C

FIG 3A

FIG 3B

## FIG 4A

## FIG 4B

# FIG 5 A

# FIG 5B

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4219311 C2

- EP 0793870 A1